(19) Europäisches Patentamt

European Patent Office

Office européen des brevets

(11) Publication number: **0 098 387**
A1

# EUROPEAN PATENT APPLICATION

(21) Application number: 83105374.9

(22) Date of filing: 31.05.83

(51) Int. Cl.³: **A 23 N 12/08**, A 23 F 5/04

(30) Priority: 08.06.82 IT 345082

(43) Date of publication of application: 18.01.84
Bulletin 84/3

(84) Designated Contracting States: AT BE CH DE FR GB LI
LU NL SE

(71) Applicant: OFFICINE VITTORIA S.P.A., Via F.Milani 10,
I-40135 Bologna (IT)

(72) Inventor: Camerini Porzi, Piercesare, 4, Via Gaspari,
I-40033 Casalecchio di Reno (Bologna) (IT)

(74) Representative: Porsia, Dino, Dr. et al, c/o Succ. Ing.
Fischetti & Weber Via Caffaro 3, I-16124 Genova (IT)

(54) High thermal efficiency automatic plant for roasting coffee or other products.

(57) This invention relates to a plant for roasting coffee or other products, which can be completely automated, and which presents a high thermal efficiency. The plant according to the invention is characterized in that it comprises at least two treatment drums (1, 2), of the type which is generally used with roasting machines; in one of said drums (1), coffee is pre-heated to such temperatures as to dry it completely and, therefore, to homogenize the color thereof, while in the other drum (2), the coffee, dried as set forth above, is submitted to the roasting step proper. In the plant according to the invention, the fumes existing from the treatment drums, are re-circulated through a fume-burning equipment associated with the burner (4) that generates the heat required for the operation of said plant, the arrangement being such as to permit the heat of said fumes to be recovered and to ensure that the portion of fumes being finally discharged will not pollute the atmosphere. All the components of the plant, with the exception of the electric motors, the hopper (3) for feeding the product, and the tank (13) for cooling the roasted coffee, are located within a thermally and acoustically-insulated chamber (15), whereby the operation of the plant will be extremely noiseless, and the heat likely to be dissipated by said components may be recovered in the burning equipment (4) which draws the air for combustion from the interior of said chamber (15).

## High thermal efficiency automatic plant
## for roasting  coffee or other products.

Presently, coffee is roasted within a drum wherein the temperature is raised gradually, even to values above 230°C. Since all the individual coffee beans have not the same degree of ripeness, in the conventional art, in the attempt to reach the desired degree of roasting also of the unripe beans, the more ripe beans are subjected to considerable pyrolysis effects, thus compromising the quality of the final product. Therefore, the conventional roasting techniques do not lend themselves to be automated completely, require long treatment periods and high consumption of thermal energy.

The object of this invention is to overcome these and other drawbacks by means of the following procedure. Coffee is first dried by treating the same to such a temperature as to ensure a suitable homogenization of the color of the beans. In this step, coffee may be advanta= geously submitted to a temperature of approximately 100 to 150°C. In a subsequent step, the product which has been treated as described above is heated to the temperature required for roasting, for example of approximately 190°C. Preferably, these two treatments are carried out within two individual drums, which are so related as to permit the dried coffee to be readily transferred from the pre-heating drum into the roasting drum. By this new procedure, the entire roasting cycle can be automated and the installation, once started, will discharge roasted coffee at time intervals which are less than half the intervals occurring in the conventional roasting machines. Moreover, the shrinkage of the product is 2 percent less than that occurring with the conventional methods. Finally, the plant according to the invention is characterized by a high thermal efficiency and by an extremely noiseless operation, since the fumes issuing from the treatment drums are re-circulated and the various operating components are located in a suitably insulated chamber.

Further characteristics of the installation, and the advantages resulting therefrom, will be apparent from the following description of a preferred embodiment thereof, illustrated merely as a non-limiting example in the Figures of the single sheet of drawings, in which:

Figure 1 is a diagrammatic block view of the plant according to the invention;

Figure 2 is a diagrammatic sectional view of the heat generator used in the installation according to the invention.

In the Figures, 1 and 2 indicate the operating drums, of the type which is usually utilized in roasting machines; said drums have substantially the same capacity and are arranged, preferably, either in superimposed relation, or, anyway, at different levels so that the product which has been treated in the upper drum may be, if desired, transferred through suitable conveying ducts, into the lower drum. Associated with the drum 1 is a hopper 3 for feeding the product thereinto.

The numeral 4 indicates a burner or heat-generator, which will be described hereinafter with greater detail. The heat generated by this generator is transferred into said drums 1 and 2. The outlets for the fumes from the drums 1 and 2 are connected, through respective thermostat--controlled regulating valves 5 and 6, to the inlets of respective electrically-operated blowers 7 and 8, the outlets of these latter being connected to the inlets of cyclone separators 9, 9' provided with bottom rotary valves 10, 10' which are controlled, preferably, by a single motor. The outlets for the fumes from the cyclone separators 9, 9' are connected to the combustion chamber of the generator 4, whereby the fumes issuing from the drums are recirculated entirely through the generator.

Branched from the outlet circuit of the heat generator 4 is a valve 11 the outlet of which communicates with a stack 12 or chimney for free discharge to the atmosphere. The operation of the plant, as to the components considered heretofore, is simple and apparent. Let us assume that a certain amount of product fed through the hopper 3 is in the drum 1 and has not yet been subjected to any heat treatment, and that the amount of product which was formerly in the drum 1 and which has been heated is in the drum 2. Upon starting the plant, the heat from the generator 4 is drawn through the drums 1 and 2 by the action of the electrically-operated blowers 7-8. The valves 5 and 6 are so adjusted as to normally permit the flow through the drum 1 of an amount of heat which is greater than that flowing through the drum 2, and, specifically, in such a manner that the temperature in the drum 1 will not exceed 150°C, and the temperature in the drum 2 will not exceed 190°C approximately. The fumes issuing from the two treatment drums 1 and 2 flow through the cyclone separators 9-9' where the small pellicles formed by the skin of coffee beans are removed therefrom, and finally reach the generator 4 which purifies them and recovers the heat therefrom. The excess of pressure and, possibly, of temperature in the heating circuit may be freely and automatically discharged into the atmosphere through the valve 11. The control programme for opening the valves 5-6-11 is varied according to the quality and quantity of product to be roasted in the plant and according to either the degree of roasting to be reached or the specific requirements. Said valves may be controlled either manually or automatically. Preferably, arranged on the delivery conduits of the burner 4 are automatic valves 105, 106 which will close automatically when the tempe= rature in the drums 1 and 2 raises above the values specified above.

The fumes discharged to the atmosphere, obviously, are free from harmful contaminants because they are hyper-oxidated while passing through the generator 4.

When the product has been roasted in the drum 2 (suitable means known in the art being provided to detect the completion of the roasting operation), the plant is temporarily stopped, the product in the drum 2 is discharged into the cooling tank 13, the product in the drum 1 is transferred into the drum 2, and a new batch of product is fed from the hopper 3 into the upper drum 1. The time period for roasting the coffee in the drum 2 is of about 5 to 7 minutes, adn the pre-heating of coffee in the drum 1 will require a similar period. During the normal operation, the plant will discharge roasted coffee at time periods which are substantially half the periods occurring with the conventional roasting machines.

The numeral 14 indicates an electrically-operated blower for cooling the coffee which has been discharged into the tank 13. Generally, the outlet of the tank 13 is freely communicating with the atmosphere through the chimney 12; otherwise, the outflow from said outlet can be discharged into a chamber 15 defined by walls 16 of thermally and acoustically insulating material, and enclosing all the operating components of the installation, with the exception of the motors, the tank 13 and the screw conveyor 17 which collects the skin particles out= flowing from the rotary valves 10-10' of the cyclone separators 9-9'. Said chamber 15 grants the following advantages: the thermal insulation of the individual components (which due to their configuration cannot be lined easily with insulating material) is minimized; the operation of the plant is extremely noiseless; even the smallest amounts of heat dissipated from the various components of the installation can be recovered and, therefore, the thermal efficiency of the installation can be further increased because the generator 4 is fed with the air from the interior of said chamber 15. The cooling tank 13 may be enclosed in a chamber 18 which is defined partly by the walls of the chamber 15 and partly by perforated partitions 19 through which the ambient air is allowed to pass for cooling the coffee. By virtue of this further improvement, the energy consumption of this installation will be of about 200 to 250 calories per kilogram of product, with respect to the consumption of 350 to 400 calories/Kg required in the conventional roasting machines.

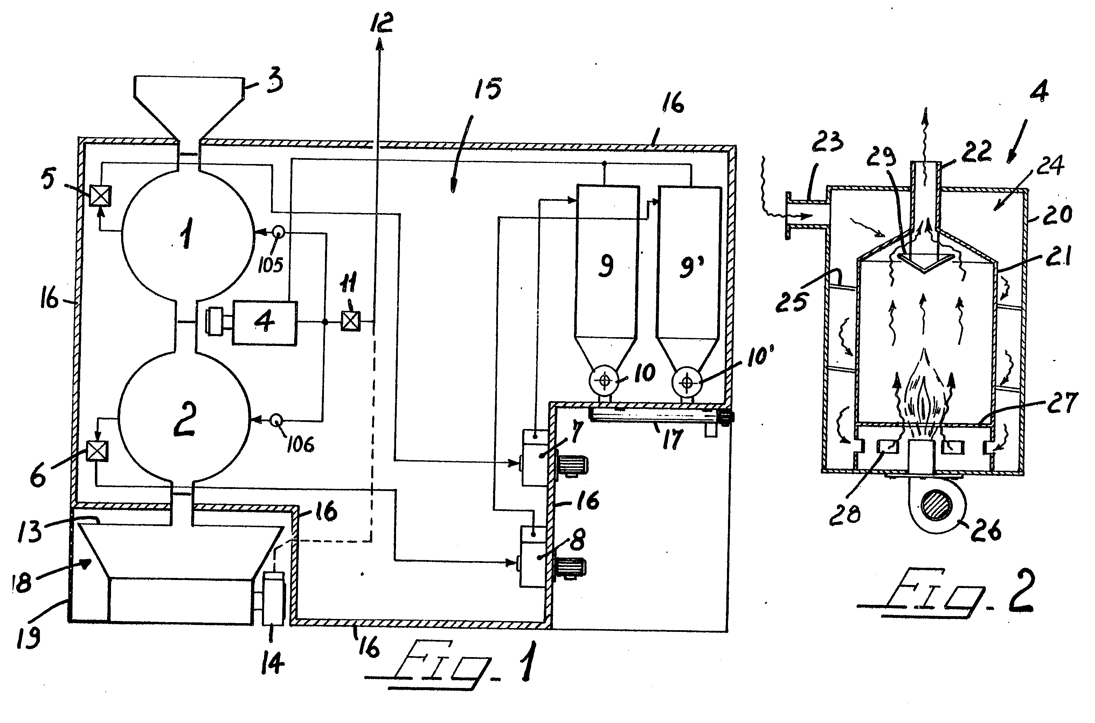

With reference to Figure 2, the heat generator will be described hereinafter. This generator comprises a preferably cylindrical round-section casing or enclosure 20 which is heat-insulated and containing therein a further casing or enclosure 21 which is provided at one end thereof with a conduit 22 sealingly protruding out= wardly through said enclosure 20 and constituting the delivery conduit of the generator 4. The fumes from the cyclone separators 9-9' are introduced through the inlet 23 into the interspace 24 defined between the enclosures 20-21 and having the form of a labyrinth due to the arrangement of baffles 25 therein. The burner 26, fitted at the base of the enclosure 20, throws its flame into the enclosure 21, through a slotted diaphragm 27, whereby the fumes being sucked through the bottom openings 28 of the enclosure 21 will be obliged to get through the flame and will be purified thereby before being recirculated. A flame baffle 29 is suitably arranged within the combustion chamber of the generator 4.

It is to be understood that the constructional details of the valves 5-6 and 11, drums 1-2, feeding hopper 3 and cooling tank 13 have been omitted because they are obvious and easily conceivable by those skilled in the art. It is also to be understood that various changes and modification may be made to the plant described above; for example, the cyclone separators 9-9' may be connected in series rather than in parallel, and the components of the plant may be arranged differently. The plant may comprise a number of drums other than two, and may comprise one burner for each drum.

## CLAIMS

1. A plant for roasting coffee or other products, characterized in that it comprises at least two treatment drums (1,2) of the type used generally in roasting machines, the product being dried in one of said drums, while the roasting proper of the product previously treated in said one drum is effected in the other drum; means being provided to prevent the temperature in the two drums from raising above pre-established limits which for the drying step are of the order of about 150°C and for the final roasting step are preferably of the order of about 190°C.

2. A plant according to claim 1, characterized in that the two treatment drums (1,2) are so arranged that the drying drum (1) is positioned above the roasting drum (2), the hopper (3) for feeding the product being arranged above said one drum (1) and the cooling tank (13) for the roasted coffee being arranged below said other drum (2), the arrangements being such as to permit the product to be transferred quickly and easily to the various treatment units.

3. A plant according to claim 2, characterized in that the degree of roasting of the product in the drum carrying out such a treatment is controlled by any suitable device, such as for example a device responsive to a predetermined colour reached by the roasted coffee, said device controlling the temporary disactivation of the heat generator (4), the discharge of the product from the roasting drum (2), the transfer of the product from the drying drum (1) to the roasting drum (2), and the supply of a new batch of product into said drying drum (1).

4. A plant according to claim 2, characterized in that the roasted product is discharged at time intervals of the order of 5 to 7 minutes.

5. A plant according to the preceding claims, characterized in that it comprises at least one heat generator (4) connected to said two treatment drums (1,2), respective conduits extending therefrom to the inlets of suitable electrically-operated blowers (7,8), respective regulating valves (5,6) being inserted in said conduits and being controlled either manually or automatically through any suitable means whereby the pre-established temperature levels in the drums will not be exceeded.

6. A plant according to claim 2, wherein inserted in the conduits extending from the heat generator (4) to the treatment drums are safety valves (105,106) which are of the normally-opened type and which close automatically to prevent heat from reaching the drums if the pre-established operating temperature in the drums is exceeded.

7. A plant according to claim 5, wherein the fumes issuing from said blowers (7,8) associated with the treatment drums are obliged to pass through cyclone separators (9,9) which precipitate the pellicles entrained in said fumes, the fluid outlet from said cyclone separators being connected to the roasting heat generator (4), at least one valve (11) being provided to discharge any exceeding pressure and a portion of purified fumes to the atmosphere, whereby the air pollution by said in= stallation is reduced and recovery of heat is effected of heat from the fumes issuing from the treatment drums.

8. A plant according to claim 7, wherein all the components of the installation, excepted the hopper (3) feeding the product into the treatment drum, the electric motors and the cooling tank (13) for said product, are enclosed in a thermally and acoustically-insulated chamber (15).

9. A plant according to claim 7, wherein the heat generator (4) comprises a burner (26) the flame of which passes through the central slot of a diaphragm (27) in the combustion chamber, the arrangement being such that the fumes being sucked through openings (28) formed in this region of the combustion chamber and coming from a further thermally-insulated chamber (24) enclosing said combustion chamber, will be obliged to get through the flame of the burner and be purified thereby before being recirculated.

Fig. 1

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-3 589 912 (J.L. ADLER et al.)<br>* Column 2, line 38 - column 3, line 20 * | 1 | A 23 N 12/08<br>A 23 F 5/04 |
| Y | US-A-2 644 681 (W.S. SCULL et al.)<br>* Column 1, lines 32-35; column 3, line 20 - column 7, line 30; figures 1-3 * | 1,4-6 | |
| A | EP-A-0 040 823 (OFFICINE VITTORIA S.P.A.) | | |
| A | US-A-2 952 452 (J.L. KOPF) | | |
| A | US-A-4 096 792 (H.L. SMITH, JR.) | | **TECHNICAL FIELDS SEARCHED (Int. Cl. ³)** |
| A | DE-C- 518 979 (D.G. STEELEY) | | A 23 N<br>A 23 F |
| A | FR-A-1 451 184 (V. REINERO) | | |

The present search report has been drawn up for all claims

| Place of search<br>THE HAGUE | Date of completion of the search<br>13-09-1983 | Examiner<br>NEHRDICH H.J |
|---|---|---|